(19) **Europäisches Patentamt**
**European Patent Office**
**Office européen des brevets**

(11) **EP 2 330 388 B1**

(12) **EUROPEAN PATENT SPECIFICATION**

(45) Date of publication and mention of the grant of the patent:
**04.09.2013 Bulletin 2013/36**

(51) Int Cl.:
***G01D 5/241*** *(2006.01)*

(21) Application number: **09015054.1**

(22) Date of filing: **04.12.2009**

(54) **Method of determining an absolute angle of rotation of a capacitive motion encoder**

Verfahren zur Bestimmung des absoluten Winkels eines kapazitiven Bewegungscodierers

Procédé pour déterminer un angle absolu de codeur de mouvements capacitif

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**08.06.2011 Bulletin 2011/23**

(73) Proprietor: **Hengstler GmbH**
**78554 Aldingen (DE)**

(72) Inventors:
• **Bücher, Johann**
**78554 Aldingen (DE)**

• **Held, Siegfried**
**78166 Donaueschingen (DE)**

(74) Representative: **Riebling, Peter**
**Patentanwalt,**
**Postfach 31 60**
**88113 Lindau/B. (DE)**

(56) References cited:
**WO-A1-02/084222     WO-A2-02/31432**
**WO-A2-2008/064760     US-A1- 2004 252 032**
**US-A1- 2006 176 189**

## Description

The invention refers to a capacitive motion encoder and a method of operating a measuring circuit, and to a method of determining an absolute angle of rotation of said capacitive motion encoder.

An example of such a motion encoder is disclosed in DE 600 16 395 C2. In accordance with Figure 2 of this reference, quadrant measuring is also carried out. Four separate quadrant fields defined on a stator are swept over by an eccentric rotor. A corresponding capacitance is captured from each quadrant field and processed in a measuring circuit.

Therefore, the invention is based on the problem of further developing a capacitive motion encoder in accordance with DE 600 16 395 C2 (EP 1,173,730 B1) enabling the capacitance to be captured with greater accuracy.

To achieve the object of the invention, it is characterized by the technical teaching included in claim 1.

The essential feature of the invention is that, during the total measuring cycle which may, for example, last for a period of 10 to 100 $\mu$s, a series of cyclical successive measurements is carried out, where, within a measurement period which may, for example, be in the range of 2 $\mu$s to 20 $\mu$s, the capacitance of the corresponding quadrant is interrogated successively and, in addition, during the course of the total measuring cycle and following interrogation of the last capacitance (fourth capacitance), this fourth capacitance is interrogated once again, followed by subsequent interrogation of the third, the second and the first capacitance ; and all 8 measurements form the entire measuring cycle and, in addition for the evaluation of these 8 obtained measuring values, the first capacitance values measured at the beginning and at the end of the measuring cycle are brought into relationship with each other, the second capacitance value interrogated in second place and the last but one capacitance value are also brought into relationship with each other and capacitance value C3 interrogated in third place is brought into relationship with the last but two capacitance values interrogated, and capacitance value C4 interrogated in fourth place is brought into relationship with the last but three capacitance values interrogated.

Therefore, according to the present invention, an entire measuring cycle is defined comprising 8 individual measurements, where each quadrant makes only one measuring value available so that there are only 4 measuring values which, however, are measured twice.

According to the present invention, there is a much better capture of capacitance per total measuring cycle because the result is a total of 8 measuring values taken from 4 quadrants.

The figures defined herein (4 quadrants and 8 measurements) are to be understood as exemplifying and not limiting the scope of the present invention. For example, there may also be 3 or 5 or 6 quadrants instead.

If there are three quadrants, 6 individual measurements are carried out by applying the technical teaching of the invention, and if there are 5 quadrants 10 measurements are carried out.

Then, in accordance with the processing principle defined below, these measuring values are also connected combinatorially in the same way. However, as mentioned above, the invention is not limited hereby.

In a preferred additional embodiment of the present invention, it is provided that the mutual accounting of the corresponding individual capacitances of the 4 quadrants (C1 to C1' or C2 to C2' or C3 to C3' or C4 to C4') is carried out so that a mean value is formed of the two measuring values C1, C1', i.e. C1M and a differential value, i.e. C1 DIFF.

The same teaching also applies to the other capacitance values so that, for example, mean value C2M and differential value C2DIFF are formed of capacitance value C2.

With this technical teaching an essential advantage is achieved compared with the prior art because it is possible for the first time to read out and further process relatively small measurement values in finest resolution.

The formulae defined below always include factor 3.5. This factor results from the fact that, in the course of the measuring cycle, the distance between capacitance C1 and the virtual mean measuring point is exactly 3.5 periods.

The virtual time of measurement is in the middle of the 8 capacitance values measured, i.e. there are 4 measurements before and 4 measurements after the virtual time of measurement. The virtual time of measurement is only defined after 8 successive measurements have been carried out.

Based on the double interrogation of each individual capacitance (of a total of 4 capacitances) at different times results in much more accurate computational methods which are described in detail below.

The computational methods described below are to be understood as the essence of the invention and the method of determining individual capacitance values and an entire capacitance as well as of determining the angle of rotation of the rotor relative to the stator is claimed as being essential to the present invention.

## Equations for single measurements $C_1$ $C_2$, $C_3$, $C_4$, $C_5$, $C_6$, $C_7$, and $C_8$

The following denotations apply to additional calculations:

$\theta_0$ - initial value of angle at the beginning of the measurement,
$C_{0i}$ - nominal value (i.e. offset) for each quadrant, i=1,2,3,4

$\Delta C_i$ — maximum amplitude variation for each quadrant,

w- radial speed of sensor

$T_{cycle}$ duration of 1 cycle

The results of measuring the 8 values can also be represented by the following 8 equations (1) through (8):

$$C_1 = C_{01} + \Delta C_1 {}^* \sin(\theta_{0F}), \tag{1}$$

$$C_2 = C_{02} + \Delta C_2 {}^* \cos(\theta_{0F} + \omega T_{cycle}) \tag{2}$$

$$C_3 = C_{03} - \Delta C_3 {}^* \sin(\theta_{0F} + 2\omega T_{cycle}) \tag{3}$$

$$C_4 = C_{04} - \Delta C_4 {}^* \cos(\theta_{0F} + 3\omega T_{cycle}) \tag{4}$$

$$C_4' = C_{04} - \Delta C_4 {}^* \cos(\theta_{0F} + 4\omega T_{cycle}) \tag{5}$$

$$C_3' = C_{03} - \Delta C_3 {}^* \sin(\theta_{0F} + 5\omega T_{cycle}) \tag{6}$$

$$C_2' = C_{02} + \Delta C_2 {}^* \cos(\theta_{0F} + 6\omega T_{cycle}) \tag{7}$$

$$C_1' = C_{01} + \Delta C_1 {}^* \sin(\theta_{0F} + 7\omega T_{cycle}) \tag{8}$$

On the basis of the first 8 equations (1) through (8) differential values can be calculated appropriately:

**Equations for approximated mean values of single measurements $C_1{}^m$, $C_2{}^m$, $C_3{}^m$ and $C_4{}^m$**

Based on the definitions of the previous equations the mean values are calculated in the following way:

$$C1m = (C1 + C1')/2 \tag{9}$$

4 valid sampled points are based on 8 measurement values. Two pairs of them are taken from opposite (diagonal) quadrants, i.e. capacitances $C_1{}^m$ and $C_3{}^m$ are one pair, capacitances $C_2{}^m$ and $C_4{}^m$ are a second pair.

**Equations for approximated differential values of single measurements $C_1{}^{diff}$, $C_2{}^{diff}$, $C_3{}^{diff}$ and $C_4{}^{diff}$**

On the basis of the first 8 equations (1) through (8) differential values are calculated appropriately as follows:

$$C1diff = (C1 - C1')/2 \tag{13}$$

**Finding the ratio between amplitude variations in opposite (diagonal) quadrants r1 and r2**

Based on equation (13) the ratio between amplitude variations in opposite quadrants can be calculated. The ratio between differential values in the first and third quadrant is referred to as b, and the ratio between the second and fourth quadrant is referred to as a.

If the sensor is without wobble influence, all 4 quadrants have the same offset value, and asymmetry is only present in the positive and negative parts of the sinusoid. It makes sense that in the positive part of the capacitance signal the maximum amplitude variation $\Delta C_+$ is different from that in the negative part $\Delta C$.

Wobble influence means that the area of the rotor plate is not parallel to the area of the stator plate.

### Scaled values of $C_1^m$ and $C_2^m$

Under the influence of wobble and some parasitic effects all 4 sinusoids (from all 4 quadrants) do not have the same nominal values or the same amplitude variations. The values measured from the first quadrant are scaled with the value of 7/3b. They are brought into the same boundaries as the values from the third quadrant. Their offsets also have to be the same. This approximation is used to calculate their offsets. The same is valid for scaled value C2m' and C4m. algorithm

Amplitude variations from scaled values $C_1^m$, and $C_3^m$ are the same. Their offsets also have to be equal. This approximation is used to calculate their offsets. The same is valid for scaled values $C_2^m$, and $C_4^m$.

### Finding the position angle without value x (x=ωTcycle) calculation

The value of the angle is calculated as:

$$\Phi = \operatorname{arctg}[\operatorname{sqrt}(3*\operatorname{abs}(C_{30}^m/C_{40}^m)*\operatorname{abs}(C_4^{diff}/C_3^{diff}))], \qquad (64a)$$

$$\Phi = \operatorname{arctg}[\operatorname{sqrt}(7/5*\operatorname{abs}(C_{10}^m/C_{20}^m)*\operatorname{abs}(C_2^{diff}/C_1^{diff}))], \qquad (64b)$$

and for algorithm applications it is:

$$\Phi t = \operatorname{abs}(\Phi) \qquad (65)$$

### Finding the quadrant and final angle of rotation

According to the signs of values $C_{10}^m$ and $C_{20}^m$ the quadrant of the position can be obtained as follows:

$$C_{10}^m>0, C_{20}^m>0 : \text{quadrant I, i.e. } \Phi_{final}=\Phi t \qquad (65a)$$

$$C_{10}^m>0, C_{20}^m<0 : \text{quadrant II, i.e. } \Phi_{final}=\pi-\Phi t \qquad (65b)$$

$$C_{10}^m<0, C_{20}^m<0 : \text{quadrant III, i.e. } \Phi_{final}=\pi+\Phi t \qquad (65c)$$

$$C_{10}^m<0, C_{20}^m>0 : \text{quadrant IV, i.e. } \Phi_{final}=2\pi-\Phi t \qquad (65d)$$

Once the quadrant is found and the value of angle $\Phi$ is approximated (equation 65) the position of the sensor is known.

**The position estimation algorithm - fine trace applications**

The development of the previous position estimation algorithm is based on approximations of sin(x) with only one-term of Taylor series for the small value of x. For the fine trace this approximation for the greater values of M is not valid because the x value is M times greater.

For the fine trace equations (1) through (8) are defined in the next manner, where M is the number of poles in fine trace. Its values are usually 8, 16, 32, i.e. powers of 2.

The object is to estimate the position angle from 8 basic measurements, 2 measurements for each quadrant. In ideal circumstances all 4 capacitors measured have the same nominal and amplitude variation values. In a real-life application these values are not the same.

One possibility is that all 4 quadrants have the same nominal and amplitude variation values, but with asymmetry in the positive and negative part of the sinusoidal period. The following algorithm shows the good results for this case.

The performance of the algorithm is good if the 4 sinusoids have the same nominal values, but different amplitude variations.

And the third case covered by the algorithm is when the capacitor is under the influence of wobble. The four capacitance values have neither the same nominal values nor the same amplitude variations. The aim is to bring each pair of values measured into the same boundaries, so they have the same nominal and amplitude variation values. One pair consists of measurements made in opposite quadrants, for example, measurement values taken from quadrants 2 and 4 make one pair, measurement values taken from quadrants 1 and 3 make a second pair.

To find the offset for each quadrant separately, the measured values are calculated without the DC component. Their ratios and ratios of amplitude variations or ratios of defined differential values of initial measurements are used to estimate the position angle. Since all of these non-ideal possibilities yield good results, the coarse trace algorithm is very robust for sensor realization.

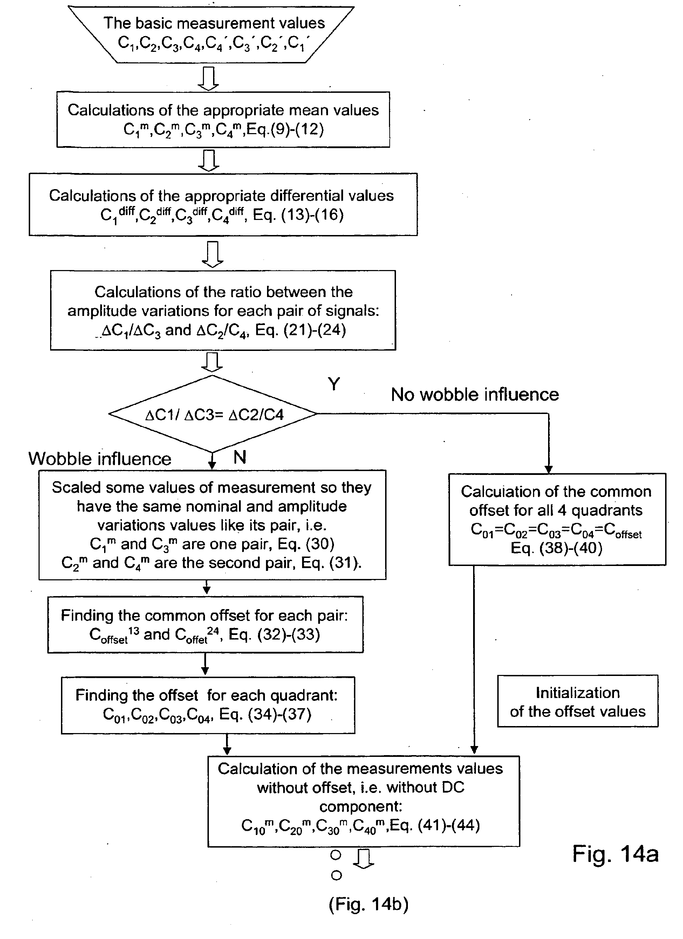

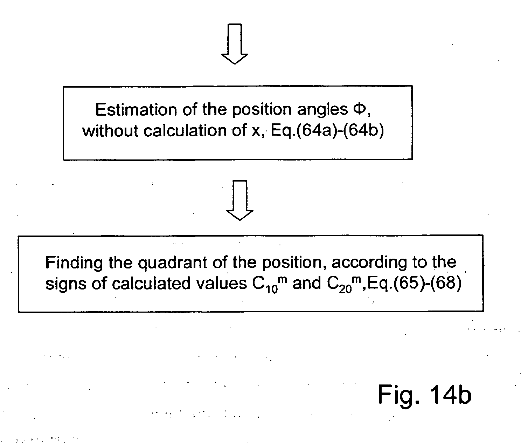

The flowchart is presented in Fig.14. The marked part of the chart denotes the initialization step. These steps calculate the offset values for all 4 quadrants. In ideal circumstances they only have to be carried out once, in the beginning after the first set of measurements, or at most a few times for each number of groups. But from simulation results it appears that the results are better if these offset values are calculated for each measurement set. For further calculations only 8 parameters calculated with equations (9) through (16) are necessary. The calculation of offsets is different with and without wobble influence.

Once offset values for each separate quadrant are known, the mean values of measurements without offset can be calculated. Using these values without DC component and differential values of initial measurements the position quadrant and position angle are estimated. The $x=\omega Tcycle$ parameter can be calculated and its value can be used for angle estimation purposes. Because of the very small value of x an alternative position angle estimation is developed. Because a smaller resolution than the calculation of x may be required, and because more calculations are necessary for angle estimation, the alternative estimation of angle is simulated and the results are presented in the next section. This alternative case for angle estimation is suggested for practical implementation purposes.

**Interpolation on the set of points measured**

In order to simulate real-time conditions with capacitances sampled at each $\omega$*Tcycle point in time (equations (1) through (8)) interpolation is carried out.

**Raw estimated angle**

The original version of the above position estimation algorithm (also referred to as algorithm**1** - **Fig. 14**) is sensitive to irregularities in the shape of values measured. algorithm

**Conclusion on position estimation by algorithm 1**

With mechanical tolerances and measurement results, the position estimation algorithm 1 is not precise enough. To get a more precise result the next steps are

- Searching for a comprehensive calibration and correction algorithm to correct the curves.
- Modifying the position estimation algorithm 1 to correspond with the calibration and correction algorithm.
- Calibration and correction algorithm.

One of the most important advantages of the position estimation algorithm 1 is that the calibration and correction process is incorporated, and therefore it is possible to carry out calibration and correction in real-time, i.e. instantly. The presupposition is that the deviation of the curves is limited to a few possible cases. In other words, the behaviour of the measured curves (offset and asymmetrical amplitudes) is known deterministically. Thus, dealing with the elimination of offset and asymmetrical amplitudes is not part of an explicit algorithm which would deal with it, but is achieved in a few elegant steps.

The results measured show that irregularities of capacitance curves are various and ambiguous. This requires calibration and correction on a more complex level, and with more computational overhead, but is necessary.

The two main steps are as follows:

- Calibration is a first step in the elimination of the offset and equalizing the amplitude of the measured curves. If measured curves are just translated and/or have different amplitudes, this step would be sufficient to make them ideal. But since they are also deviated, a corrective step is also necessary.
- Correction completes offset elimination and equalization of amplitudes and removes the irregularities in the shape of calibrated curves.

The invention will now described with reference to the accompanying drawings:

Fig. 1 shows the basic principle of capacitive technology;
Fig. 2 shows an eccentric rotor plate which covers a receiver plate and partly 4 transmitters;
Fig. 3 is a block diagram of the capacitive sensor with measurement circuitry;
Fig. 4 shows a single-ended method of measurements in 4 quadrants with a common area on the stator;
Fig. 5 shows a differential method of measurements in 4 quadrants with a common area on the stator;
Fig. 6 shows a capacitive sensor with two plates;
Fig. 7 shows an equivalent scheme for capacitance measurements;
Fig. 8 shows equivalent capacitances achieved with Fig. 7;
Figs. 9 through Fig. 11 show the addition of capacitance values to result in a doubled value;
Fig. 12 shows the stator of a capacitive sensor;
Fig. 13 shows a measurement algorithm overview;
Fig. 14a shows a first part of a flow chart of a position estimation algorithm 1;
Fig. 14b shows a second part of a flow chart of a position estimation algorithm 1;

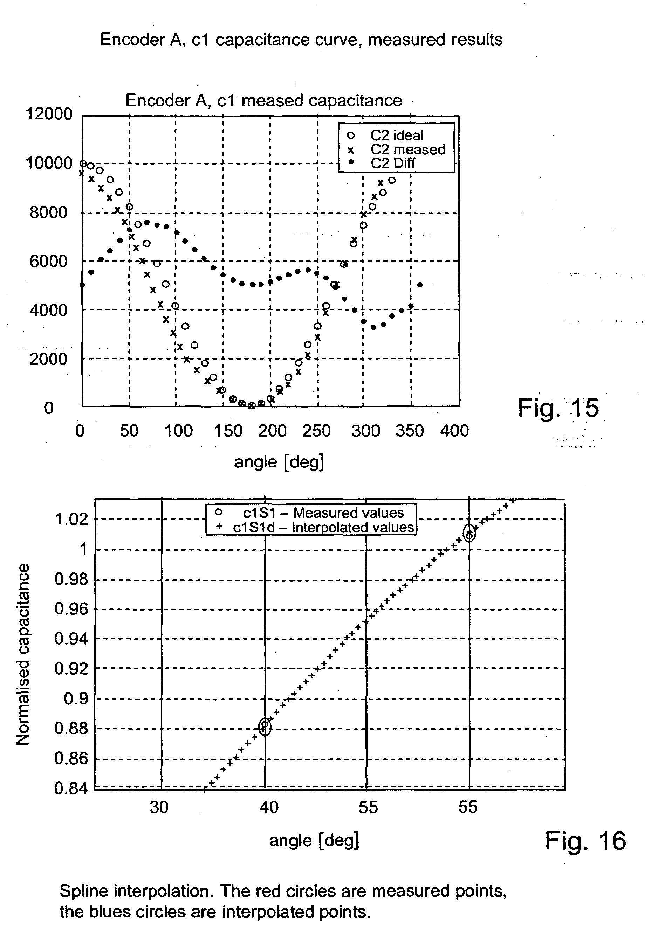

Fig. 15 shows an encoder c1 capacitance curve, results measured;
Fig. 16 shows a spline interpolation

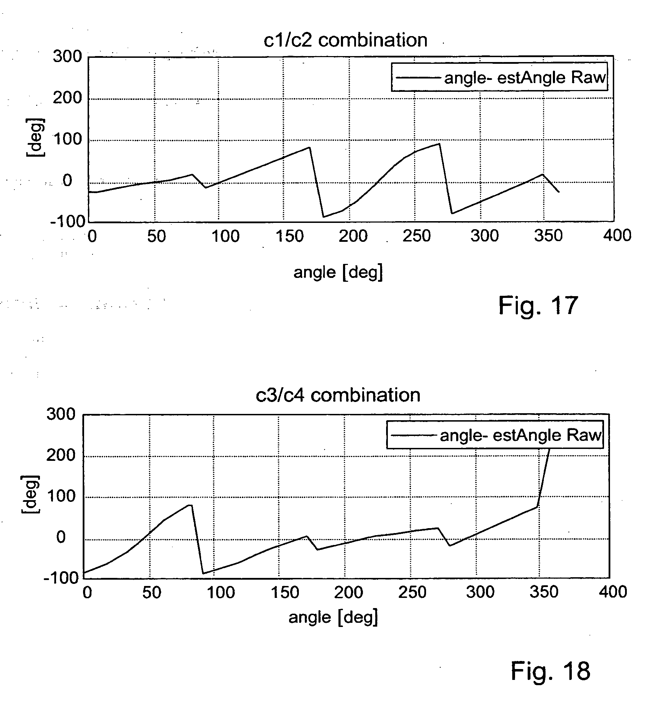

Fig. 17 shows how algorithm 1 is applied to raw and scaled measurements for combination c1/c2;
Fig. 18 shows how algorithm1 is applied to raw and scaled measurements for combination c3/c4;
Fig. 19 shows a determination of a mean virtual measurement point by evaluation of mean values; and

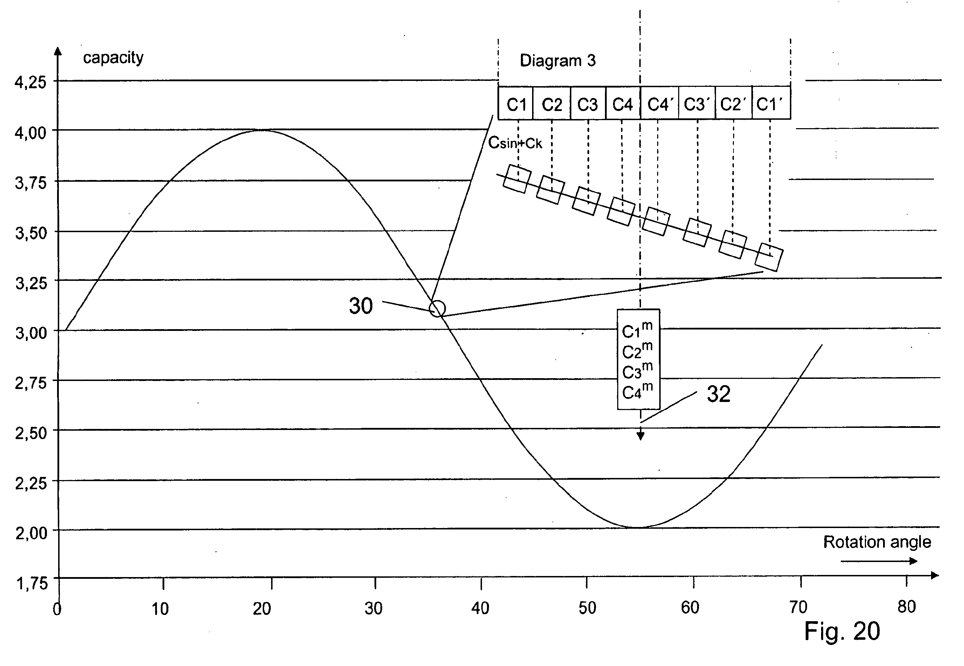

Fig. 20 shows a determination of a mean virtual measurement point with evaluation of 4 capacitances.

A capacitive-to-analog conversion was developed in addition to the mechanical and electrical design of the capacitive sensor.

An optional capacitive by time-to-digital conversion was developed for an SSI and a BiSS interface.

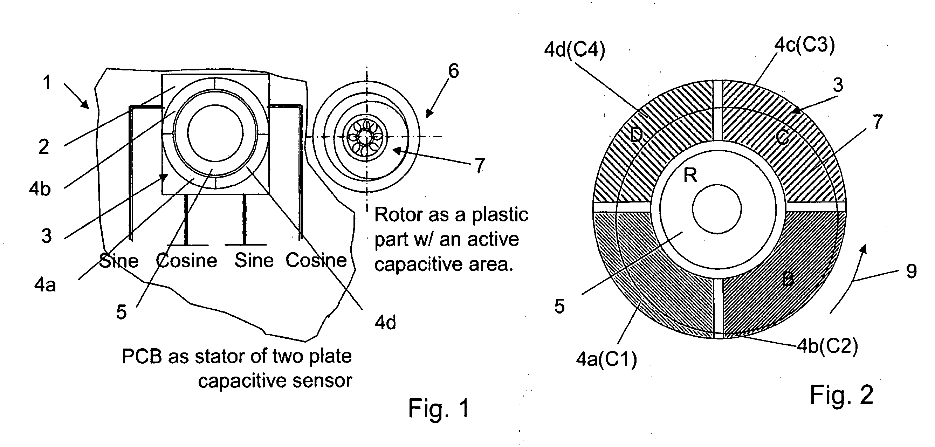

Fig. 2 shows a block diagram with a proposed system architecture.

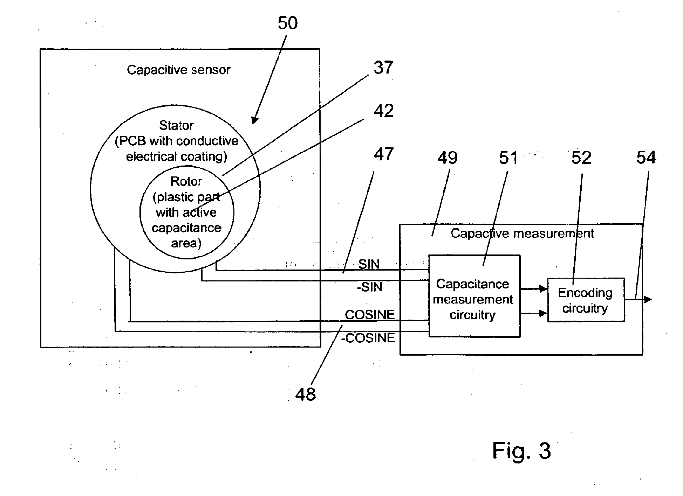

Fig. 3 shows a block diagram of the capacitive sensor with measurement circuitry

According to the present invention, a capacitive sensor comprises a stator-rotor arrangement to find the angular displacement. This is used in turn to control and position the displaced object. The stator is a PCB with conductive electrical coatings and the rotor is a plastic part with a conductive capacitive surface. Capacitive values varying during rotor rotation are measured by varying the area overlap between stator and rotor. Conductive electrical coatings are arranged on the stator (PCB) and the rotor (pastic part) to achieve the required capacitive patterns.

Conductive electrical coatings form one or more annular areas based on the precision required. The central annular area forms the coarse adjustment. Detailed 4-quadrant information is obtained by finely adjusted coatings. These 4 waveforms (SIN, -SIN, COSINE, -COSINE) are then used to find the actual displacement with fine precision.

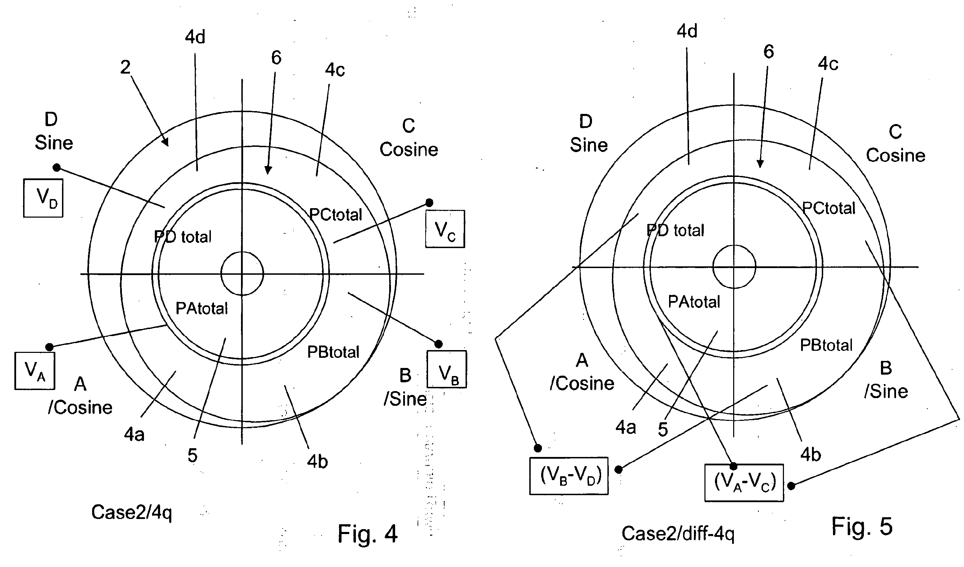

Fig. 4 shows capacitance measurements with single-ended capacitors Va, Vb, Vc, Vd, while Fig. 5 shows differential measurements in 4 quadrants with Vb-Vd and Va-Vc.

To obtain differential values, SIN and -SIN form one pair, while COS and -COS form the other, which will provide for a maximum dynamic range.

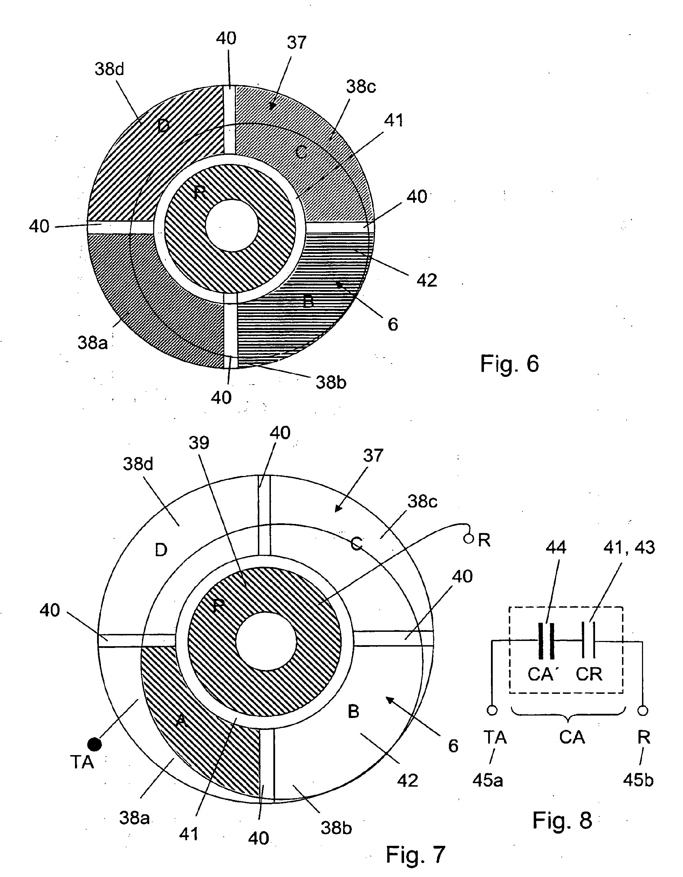

Figures 6 and 7 show the assignment of the rotor disk 6 and the centred stator surface 37.

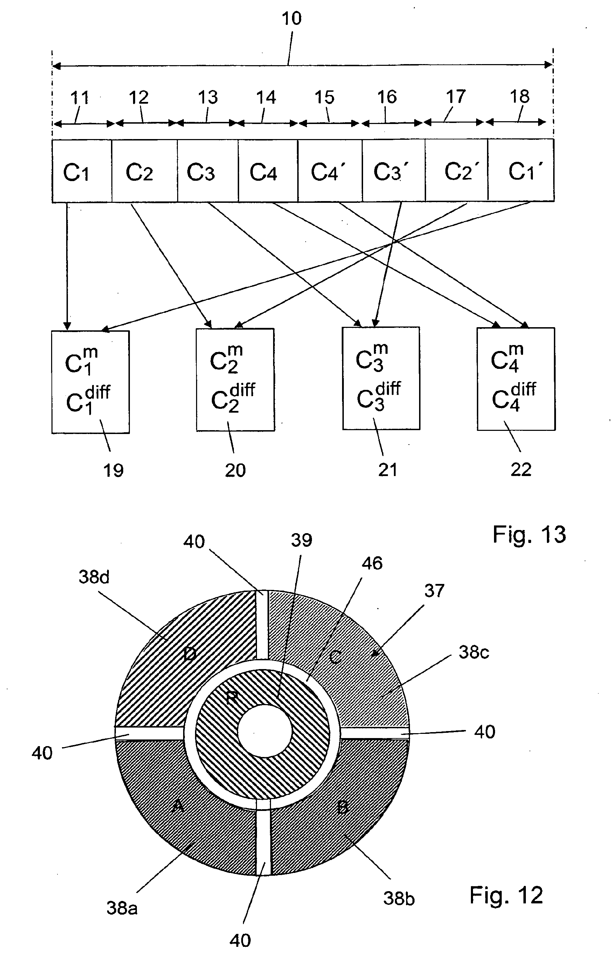

In accordance with Figure 12 stator surface 37 shows electrically conductive quadrants 38a, 38b, 38c, 38d which, however, are separated from each other by radially extending barriers so that four conductive coatings are mutually insulated .

These quadrants 38a through 38d are insulated against each other at their internal diameter by a circumferentially extending insulating ferrule 46.

An electrically conductive centred stator ring 39 is arranged at the internal circumference of insulating ferrule 46, stator ring 39 being referred to as R in Figure 12. The individual quadrants 38 are denoted with capital letters A, B, C, D.

Figures 4 through 7 show that the stator illustrated in Fig. 12 is overlapped by an eccentric rotor disk 6 comprising a continuous electrically conductive coating. Said eccentric rotor disk 6 comprises an internal rotor ring 41 developed as a centred ring connected in an electrically conductive manner with all the other eccentric areas of rotor disk 6 by means of a conductive coating. The result is a virtual rotor ring 41 arranged as a virtual conductive surface in the area of the entire conductive surface of said eccentric rotor disk. It is important that this virtual centred rotor ring 41 be exactly opposed to centred stator ring 39 and, in accordance with Figure 8, forms a continuous, non-variable capacitance CR.

This is illustrated in the schematic diagram of Figure 8. Those eccentric areas of rotor disk 6 which are arranged opposite to centred quadrants 38 of stator surface 37 result in a variable capacitor CA' as shown in the schematic diagram of Figure 8 so that an overall capacitance CA results from these two capacitors, i.e. CA' and CR. The schematic diagram of 8 results for each quadrant A, B, C, and D. It is important that each quadrant is tapped 45, i.e. taps 45a and b apply to quadrant A and centred stator ring 39.

Analogous tapping serves to derive the capacitance value from quadrant B, and additional tapping serves to derive the capacitance value from quadrant C, and so forth.

Therefore, rotor disk 6 is subdivided in two parts, i.e. one eccentric external area 42 and one centred internal area with rotor ring 41. This results in constant capacitor 43 illustrated in the schematic diagram of Figure 8.

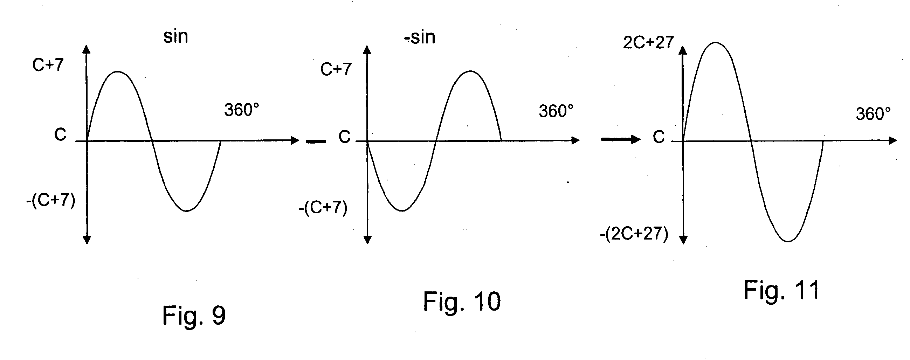

In Figure 9 a capacitance curve of a quadrant during rotation of the rotor with respect to the stator is illustrated over a complete angle of rotation of 360 degrees.

Figures 9 and 10 show the total curve according to Figure 11. The 360 degrees modulated capacitance curve is shown in Figure 9, and Figure 10 shows the modulated capacitance curve shifted by 180 degrees, where, for example, quadrants B and D are read out against each other to obtain the curve shown in Figures 9 and 10. The summation curve of Figure 11 results as a sum of these two values, wherein the capacitance values are doubled. This results in a highly accurate read-out because doubled capacitance values can be read out much more precisely than simple capacitance values. Therefore, the evaluation circuit is simpler and more precise.

The mathematical summation of the two measuring values defined in Figures 9 and 10 results in the summation curve of Figure 11.

Positive and negative half cycles provide quadrant information for angle measurements.

Capacitance Measurement and Encoding

According to Fig. 14a through 14b an algorithm is developed to map the capacitance variation to actual displacement. One of the methods is to convert the capacitance to analogous voltage and then to use TDC to obtain a digital equivalent. Zero crossing detectors are also used to obtain precise quadrant information.

OPERATING PRINCIPLES

The capacitive sensors suggested in the present invention comprise two plates, a stator and a rotor. The stator comprises 4 transmitter plates, one for each quadrant, and 1 receiver plate provided in the centre of the stator. In Figs. 4 through 7 the transmitter plates are denoted with A, B, C, and D and the receiver plate is denoted with R.

Fig. 12 shows the stator of the capacitive sensor. At all times, the rotor covers the whole receiver plate area and parts of the transmitter plate areas in each quadrant. The measurement algorithm suggested is presented in Fig. 13. There are 8 measurements in each group. The first capacitor C1 is measured during the 1 st and 8th cycle, the second capacitor C2 is measured during the 2nd and 7th cycle, the third one C3 is measured during the 3rd and 6th cycle, and the fourth C4 is measured during the 4th and 5th cycle. All of these mean values appear as if measured at time t=3.5Tcycle, but with some amplitude modifications. These amplitude modifications cause errors between ideal and approximated values for all of the 4 capacitors.

The capacitance values are measured between two points, one on one of transmitter plates 4, 38 and the second on receiver plate 5. The total capacitance between them is referred to as CA, CB, CC, CD, respectively, for each quadrant. The total capacitance consists of a serial connection of the capacitance between the transmitter plate and the rotor and the capacitance between the rotor and the receiver plate. The capacitance between the transmitter plate and the rotor is proportional to the area of overlap between these two plates, which for each quadrant is the area of the rotor which overlaps that quadrant, but excluding the central area, which is part of the receiver plate. The capacitance between the rotor and the receiver plate is always the same, and proportional to the area of the receiver overlapped by the rotor at each moment. The measurement of the capacitance is schematically illustrated in Fig.8.

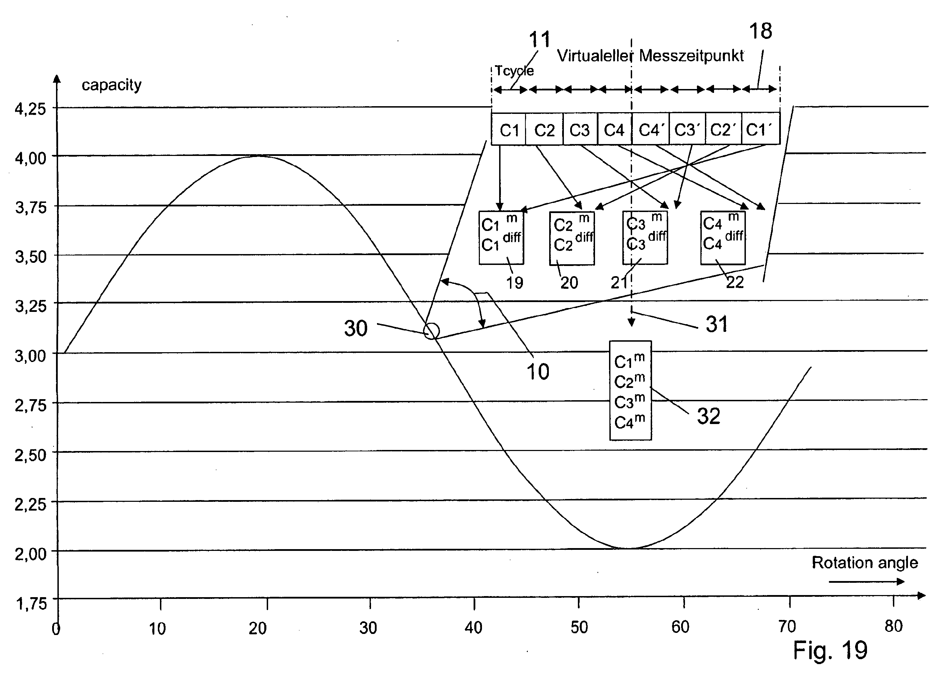

In Figure 19 the angle of rotation of the rotor relative to the stator is the abscissa while the signal amplitude is the ordinate.

Consequently, a tiny curve section is subdivided into 8 measurements within the range of the entire measuring cycle so that there is a very accurate interrogation of the variation of the curve.

One single point is shown on this sinusidal curve whch has been enlarged to illustrate that 8 measurements of capacitances will be carried out in the course of the 8 interrogation cycles (11 through 18) in this tiny curve section, where, as already mentioned, capacitances C1 through C4 are interrogated cyclically one after the other and where, in the course of a second cycle on the right hand of the virtual centred time of measurement 32, there is an interrogation of capacitances in reversed order, i.e. capacitance C4 will be interrogated first , followed by an interrogation of C3, C2, and C1. These values are denoted with an apostrophe.

The symmetry of capacitance C4 with capacitance C4' interrogated later, results in a virtual mean time of measurement 32 , so that there is a common mean time of measurement for all 8 capacitances measured. The differential value between C4 and C4' results in the virtual mean time of measurement which also applies to the differential value, or delta value, between capacitance value C3 and C3'. This also applies to the differential value between C2 and C2' and to the differential value between C1 and C1'.

This particular mean time of measurement 32 has the advantage that all capacitances have a common mean time of measurement which will result in a highly accurate position determination later.

A possible error resulting from the curve changing continuously in the course of the entire measuring cycle is thus avoided.

If no virtual mean time of measurement 32 were achieved and, for example, an additional interrogation of capacitance C1 followed after an interrogation of capacitance C4, each individual capacitance value C1 through C1' would have its own virtual mean time of measurement, which is not desired.

The curve of the capacitance value which decreases in the course of the mean time of measurement 30 (which is extremely short) is illustrated in a greatly enlarged scale. It is crucial that the interrogation algorithm according to the present invention, produces a mean time of measurment 32.

**List of Reference Numerals**

| | |
|---|---|
| 1 | capacitive sensor |
| 2 | stator |
| 3 | PCB sensor |
| 4 | transmitter sections a, b, c, d |
| 5 | receiver area |
| 6 | rotor |
| 7 | (eccentric) rotor disk |
| 8 9 | arrow |
| 10 | measuring cycle |
| 11 | interrogation cycle |
| 12 | interrogation cycle |
| 13 | interrogation cycle |
| 14 | interrogation cycle |
| 15 | interrogation cycle |
| 16 | interrogation cycle |
| 17 | interrogation cycle |
| 18 | interrogation cycle |
| 19 | combination value C1 |
| 20 | combination value C2 |
| 21 | combination value C3 22 combination value C4 23 24 25 26 27 28 29 30 time of measurement 31 virtual time of measurement 32 mean values (capacitances) 33 34 35 36 |
| 37 | stator surface |
| 38 | quadrant a, b, c, d |
| 39 | stator ring |
| 40 | barrier |
| 41 | rotor ring |
| 42 | eccentric external area |
| 43 | constant CR capacitor |
| 44 | variable CA capacitor |
| 45 | tapping a, b |

| | |
|---|---|
| 46 | insulating ferrule |
| 47 | tapping line |
| 48 | tapping line |
| 49 | measuring circuit |
| 50 | capacitive sensor |
| 51 | capacitance measurement circuitry |
| 52 | encoding circuitry |
| 53 54 | output line |

**Claims**

1. A method of determining an absolute angle of rotation of a capacitive motion encoder (1) for sensing the angular position of a rotor (6) relative to a stator (2, 37) said motion encoder comprising an eccentric rotor disc (6,7) which is movable relative to said stator (2, 37) which is provided with four electrically isolated field transmitters arranged as quadrants (4a-d, 38a-d) and a centrally located electric field receiver area (5), whereby an electrical field between each of the quadrants and the receiver area (39) is angularly modulated by a change in the capacitance between the respective quadrants and the receiver area (39) by the angular position of the eccentric rotor disc (6, 7), whereby, the method comprises an entire measuring cycle which is defined by successively measuring the capacitance between each one of the quadrants and the receiver area once, and then carrying out another four measurements of capacitance between each quadrant and the receiver area, respectively, in opposite order compared to the first four measurements and then combining the eight measurement values to produce an angular position value.

2. The method according to claim 1 **characterized in that**, from basic measurement values C1 ,C2, C3, C4, C4', C3', C2', C1', calculations of appropriate mean values C1 m, C2m, C3m, C4m, equations (9) through (12), are carried out and
that further calculations of appropriate differential values C1diff, C2diff, C3diff, C4diff, equations (13) through (16), are carried out and that further calculations of the ratio between the amplitude variations for each pair of signals, i.e. $\Delta C1/\Delta C3$ and $\Delta C2/C4$, equations (21) through (24),
$\Delta C1/\Delta C3 = \Delta C2/C4$, are carried out.

3. The method according to claim 2 **characterized in that** if there is no wobble influence calculation of the common offset for all 4 quadrants is done according to C01=C02=C03=C04= Coffset, equations (38) through (40).

4. The method according to claim 3 **characterized in that** if there is any wobble influence some values of measurement are scaled so that they have the same nominal and amplitude variations values as their counterparts, i.e. C1m' and C3m are one pair, equation (30), C2m' and C4m are the second pair, equation (31) and that the common offset for each pair is determined: Coffset13 and Coffset24, equations (32) through (33).

5. The method according to claim 4 **characterized in that** finding the offset for each quadrantis determined as follows:: C01, C02, C03, C04, Eq. (34)-(37) Finding the quadrant of the position according to the signs of the calculated values is determined by means of C10m and C20m, equations (65) through (68) and the position angle $\Phi$ is alternatively estimated, without calculation of x, equations (64a) through (64b)

6. The method according to one or more of the preceding claims **characterized in that** equations for single measurements C1, C2, C3, C4, C5, C6, C7 and C8 are as follows:

$$C_1 = C_{01} + \Delta C_1 {}^* \sin(\theta_{0F}), \qquad\qquad (1)$$

$$C_2 = C_{02} + \Delta C_2 {}^* \cos(\theta_{0F} + \omega T_{cycle}) \qquad\qquad (2)$$

$$C_3 = C_{03} - \Delta C_3 {}^* \sin(\theta_{0F} + 2\omega T_{cycle}) \qquad\qquad (3)$$

$$C_4 = C_{04} - \Delta C_4 * \cos(\theta_{0F} + 3\omega T_{cycle}) \tag{4}$$

$$C_4' = C_{04} - \Delta C_4 * \cos(\theta_{0F} + 4\omega T_{cycle}) \tag{5}$$

$$C_3' = C_{03} - \Delta C_3 * \sin(\theta_{0F} + 5\omega T_{cycle}) \tag{6}$$

$$C_2' = C_{02} + \Delta C_2 * \cos(\theta_{0F} + 6\omega T_{cycle}) \tag{7}$$

$$C_1' = C_{01} + \Delta C_1 * \sin(\theta_{0F} + 7\omega T_{cycle}) \tag{8}$$

7. The method according to one or more of the preceding claims **characterized in that**, based on equations for single measurements C1, C2, C3, C4, C5, C6, C7 and C8 (equations (1) through (8)), differential values between the appropriate are calculated as follows:

$$C1m = (C1 + C1')/2 \tag{9}$$

$$C2m = (C2 + C2')/2 \tag{10}$$

$$C3m = (C3 + C3')/2 \tag{11}$$

$$C4m = (C4 + C4')/2 \tag{12}$$

wherein two pairs are taken from opposite quadrants, i.e. capacitances $C_1^m$ and $C_3^m$ are the one pair, and capacitances $C_2^m$ and $C_4^m$ are the second pair.

8. The method according to one or more of the preceding claims **characterized in that**,
based on the first 8 equations (1) through (8), the differential values are calculated as follows:

$$C1diff = (C1 - C1')/2 \tag{13}$$

$$= -\Delta C1 * \cos(\theta 0 + \omega 3.5 T cycle) * \sin(3.5\omega T cycle) \tag{13b}$$

$$C2diff = (C2 - C2')/2 \tag{14}$$

$$=\Delta C2 * \sin(\theta 0 + \omega 3.5 Tcycle) * \sin(2.5\omega Tcycle) \qquad (14b)$$

$$C3diff = (C3 - C3')/2 \qquad (15)$$

$$=\Delta C3 * \cos(\theta 0 + \omega 3.5 Tcycle) * \sin(1.5\omega Tcycle) \qquad (15b)$$

$$C4diff = (C4 - C4')/2 \qquad (16)$$

$$=-\Delta C4 * \sin(\theta 0 + \omega 3.5 Tcycle) * \sin(0.5\omega Tcycle) \qquad (16b)$$

## Patentansprüche

1. Verfahren zum Bestimmen eines absoluten Drehwinkels eines kapazitiven Bewegungsgebers (1) zum Erfassen der Winkelposition eines Rotors (6) relativ zu einem Stator (2, 37), wobei der Bewegungsgeber eine exzentrische Rotorscheibe (6, 7) umfasst, die relativ zu dem Stator (2, 37) beweglich ist, der vier elektrisch isolierte Feldsender, die als Quadranten (4a-d, 38a-d) angeordnet sind, und einen mittig angeordneten elektrischen Feldempfängerbereich (5) hat, wobei ein elektrisches Feld zwischen den jeweiligen Quadranten und dem Empfängerbereich (39) durch eine Veränderung des kapazitiven Widerstands zwischen den jeweiligen Quadranten und dem Empfängerbereich (39) durch die Winkelposition der exzentrischen Rotorscheibe (6, 7) winkelabhängig moduliert wird, wobei das Verfahren einen ganzen Messzyklus umfasst, der durch ein aufeinander folgendes Messen des kapazitiven Widerstands zwischen jedem der Quadranten und dem Empfängerbereich ein erstes Mal und dann ein Ausführen weiterer vier Messungen des kapazitiven Widerstands jeweils zwischen jedem Quadranten und dem Empfängerbereich in der verglichen zu den ersten vier Messungen umgekehrten Reihenfolge und dann ein Kombinieren der acht Messwerte zum Erzeugen eines Winkelpositionswerts definiert ist.

2. Verfahren gemäß Anspruch 1, **dadurch gekennzeichnet, dass** aus Grundmesswerten C1, C2, C3, C4, C4', C3', C2', C1' Berechnungen entsprechender Mittelwerte C1m, C2m, C3m, C4m, Gleichungen (9) bis (12), durchgeführt werden und dass weitere Berechnungen entsprechender Differenzwerte C1diff, C2diff, C3diff, C4diff, Gleichungen (13) bis (16), durchgeführt werden und dass weitere Berechnungen des Verhältnisses zwischen den Amplitudenvariationen für jedes Paar von Signalen, d.h. $\Delta C1/\Delta C3$ und $\Delta C2/C4$, Gleichungen (21) bis (24), $\Delta C1/\Delta C3 = \Delta C2/C4$, durchgeführt werden.

3. Verfahren gemäß Anspruch 2, **dadurch gekennzeichnet, dass**, wenn kein Wobble-Einfluss vorliegt, eine Berechnung des gemeinsamen Versatzes für alle 4 Quadranten gemäß C01=C02=C03=C04=Coffset, Gleichungen (38) bis (40), durchgeführt wird.

4. Verfahren gemäß Anspruch 3, **dadurch gekennzeichnet, dass**, wenn ein Wobble-Einfluss vorliegt, einige Messwerte skaliert werden, so dass sie die gleichen Nenn- und Amplitudenvariationswerte wie ihre Gegenstücke haben, d.h. C1m' und C3m sind ein Paar, Gleichung (30), C2m' und C4m sind das zweite Paar, Gleichung (31), und dass der gemeinsame Versatz für jedes Paar: Coffset13 und Coffset24, Gleichungen (32) bis (33), bestimmt wird.

5. Verfahren gemäß Anspruch 4, **dadurch gekennzeichnet, dass** der Versatz für den jeweiligen Quadranten wie folgt bestimmt wird: C01, C02, C03, C04, Gleichungen (34) bis (37), der Quadrant der Position gemäß den Vorzeichen der berechneten Werte mittels C10m und C20m, Gleichungen (65) bis (68) bestimmt wird und der Positionswinkel $\phi$ ohne Berechnung von x, Gleichungen (64a) bis (64b), alternativ geschätzt wird.

6. Verfahren gemäß einem oder mehreren der vorhergehenden Ansprüche, **dadurch gekennzeichnet, dass** für Einzelmessungen C1, C2, C3, C4, C5, C6, C7 und C8 die folgenden Gleichungen gelten:

$$C_1 = C_{01} + \Delta C_1 {}^* \sin(\theta_{0F}), \qquad\qquad (1)$$

$$C_2 = C_{02} + \Delta C_2 {}^* \cos(\theta_{0F} + \omega T_{cycle}) \qquad\qquad (2)$$

$$C_3 = C_{03} - \Delta C_3 {}^* \sin(\theta_{0F} + 2\omega T_{cycle}) \qquad\qquad (3)$$

$$C_4 = C_{04} - \Delta C_4 {}^* \cos(\theta_{0F} + 3\omega T_{cycle}) \qquad\qquad (4)$$

$$C_4' = C_{04} - \Delta C_4 {}^* \cos(\theta_{0F} + 4\omega T_{cycle}) \qquad\qquad (5)$$

$$C_3' = C_{03} - \Delta C_3 {}^* \sin(\theta_{0F} + 5\omega T_{cycle}) \qquad\qquad (6)$$

$$C_2' = C_{02} + \Delta C_2 {}^* \cos(\theta_{0F} + 6\omega T_{cycle}) \qquad\qquad (7)$$

$$C_1' = C_{01} + \Delta C_1 {}^* \sin(\theta_{0F} + 7\omega T_{cycle}) \qquad\qquad (8)$$

7. Verfahren gemäß einem oder mehreren der vorhergehenden Ansprüche, **dadurch gekennzeichnet, dass** auf der Grundlage von Gleichungen für Einzelmessungen C1, C2, C3, C4, C5, C6, C7 und C8 (Gleichungen (1) bis (8)) Differenzwerte zwischen den Entsprechenden wie folgt berechnet werden:

$$C1m = (C1 + C1')/2 \qquad\qquad (9)$$

$$C2m = (C2 + C2')/2 \qquad\qquad (10)$$

$$C3m = (C3 + C3')/2 \qquad\qquad (11)$$

$$C4m = (C4 + C4')/2 \qquad\qquad (12)$$

wobei zwei Paare gegenüberliegender Quadranten verwendet werden, d.h. die kapazitiven Widerstände $C_1{}^m$ und $C_3{}^m$ sind das eine Paar und die kapazitiven Widerstände $C_2{}^m$ und $C_4{}^m$ sind das zweite Paar.

8. Verfahren gemäß einem oder mehreren der vorhergehenden Ansprüche, **dadurch gekennzeichnet, dass** auf der Grundlage der ersten 8 Gleichungen (1) bis (8) die Differenzwerte wie folgt berechnet werden:

$$C1diff = (C1 - C1')/2 \qquad\qquad (13)$$

$$=-\Delta C1^*\cos(\theta 0+\omega 3.5\text{Tcycle})^*\sin(3.5\omega \text{Tcycle}) \qquad (13b)$$

$$C2\text{diff}=(C2-C2')/2 \qquad (14)$$

$$=\Delta C2^*\sin(\theta 0+\omega 3.5\text{Tcycle})^*\sin(2.5\omega \text{Tcycle}) \qquad (14b)$$

$$C3\text{diff}=(C3-C3')/2 \qquad (15)$$

$$=\Delta C3^*\cos(\theta 0+\omega 3.5\text{Tcycle})^*\sin(1.5\omega \text{Tcycle}) \qquad (15b)$$

$$C4\text{diff}= (C4-C4')/2 \qquad (16)$$

$$=-\Delta C4^*\sin(\theta 0+\omega 3.5\text{Tcycle})^*\sin(0.5\omega \text{Tcycle}) \qquad (16b)$$

## Revendications

1. Procédé pour déterminer un angle de rotation absolu d'un codeur de mouvements capacitif (1) pour détecter la position angulaire d'un rotor (6) par rapport à un stator (2, 37), ledit codeur de mouvements comprenant un disque de rotor excentrique (6, 7) qui est mobile par rapport au stator (2, 37) qui est pourvu de quatre transmetteurs de champ (5) isolés électriquement qui sont disposés sous la forme de quadrants (4a-d, 38a-d) et d'une zone réceptrice de champ électrique (5) située de manière centrale, étant précisé qu'un champ électrique entre chacun des quadrants et la zone réceptrice (39) est modulé angulairement par un changement de capacité entre les quadrants respectifs et la zone réceptrice (39) grâce à la position angulaire du disque de rotor excentrique (6, 7), étant précisé que le procédé comprend un cycle de mesure entier qui est défini par la mesure successive de la capacité entre chacun des quadrants et la zone réceptrice, une fois, et par quatre autres mesures de la capacité entre chaque quadrant et la zone réceptrice, respectivement, dans l'ordre inverse par rapport aux quatre premières mesures, puis à la combinaison des huit valeurs de mesure afin de produire une valeur de position angulaire.

2. Procédé selon la revendication 1, **caractérisé en ce que**, à partir de valeurs de mesure de base C1, C2, C3, C4, C4', C3', C2', C1', des calculs de valeurs moyennes appropriées C1m, C2m, C3m, C4m, équations (9) à (12), sont effectués, et
**en ce que** d'autres calculs de valeurs différentielles appropriées C1diff, C2diff, C3diff, C4diff, équations (13) à (16) sont effectués et **en ce que** d'autres calculs du rapport entre les variations d'amplitude pour chaque paire de signaux, c'est-à-dire $\Delta C1/\Delta C3$ et $\Delta C2/C4$, équations (21) à (24),
$\Delta C1/\Delta C3 = \Delta C2/C4$, sont effectués.

3. Procédé selon la revendication 2, **caractérisé en ce que** s'il n'y a pas d'influence de vobulation, un calcul du décalage commun pour la totalité des 4 quadrants est effectué selon C01=C02=C03=C04=Coffset, équations (38) à (40).

4. Procédé selon la revendication 3, **caractérisé en ce que** s'il y a une influence de vobulation, quelques valeurs de mesure sont pondérées de sorte qu'elles ont les mêmes valeurs nominales et de variation d'amplitude que leurs équivalents, c'est-à-dire que C1m' et C3m forment une paire, équation (30), que C2m' et C4m forment la seconde paire, équation (31), et que le décalage commun pour chaque paire est déterminé : Coffset13 et Coffset24, équations (32) à (33).

**5.** Procédé selon la revendication 4, **caractérisé en ce que** la recherche du décalage pour chaque quadrant est déterminée de la manière suivante : C01, C02, C03, C04, éq. (34) - (37) , le quadrant de la position selon les signes des valeurs calculées est déterminé à l'aide de C10m et C20m, équations (65) à (68), et l'angle de position $\Phi$ est estimé alternativement, sans calcul de x, équations (64a) à (64b).

**6.** Procédé selon l'une au moins des revendications précédentes, **caractérisé en ce que** les équations pour des mesures simples C1, C2, C3, C4, C5, C6, C7 et C8 sont les suivantes :

$$C_1 \;=\; C_{01}+\Delta C_1*\sin(\theta_{0F}) \tag{1}$$

$$C_2 \;=\; C_{02}+\Delta C_2*\cos(\theta_{0F}+\omega T_{cycle}) \tag{2}$$

$$C_3 \;=\; C_{03}-\Delta C_3*\sin(\theta_{0F}+2\omega T_{cycle}) \tag{3}$$

$$C_4 \;=\; C_{04}-\Delta C_4*\cos(\theta_{0F}+3\omega T_{cycle}) \tag{4}$$

$$C_{4'} \;=\; C_{04}-\Delta C_4*\cos(\theta_{0F}+4\omega T_{cycle}) \tag{5}$$

$$C_{3'} \;=\; C_{03}-\Delta C_3*\sin(\theta_{0F}+5\omega T_{cycle}) \tag{6}$$

$$C_{2'} \;=\; C_{02}+\Delta C_2*\cos(\theta_{0F}+6\omega T_{cycle}) \tag{7}$$

$$C_{1'} \;=\; C_{01}+\Delta C_1*\sin(\theta_{0F}+7\omega T_{cycle}) \tag{8}$$

**7.** Procédé selon l'une au moins des revendications précédentes, **caractérisé en ce que** sur la base des équations pour les mesures simples C1, C2, C3, C4, C5, C6, C7 et C8 (équations (1) à (8)), 1 des valeurs différentielles entre les valeurs appropriées sont calculées de la manière suivante :

$$C1m \;=\; (C1+C1')/2 \tag{9}$$

$$C2m \;=\; (C2+C2')/2 \tag{10}$$

$$C3m \;=\; (C3+C3')/2 \tag{11}$$

$$C4m \;=\; (C4+C4')/2 \tag{12}$$

étant précisé que deux paires sont prises dans des quadrants opposés, c'est-à-dire que les capacités $C_1{}^m$ et $C_3{}^m$ forment une paire et que les capacités $C_2{}^m$ et $C_4{}^m$ forment la seconde paire.

8. Procédé selon l'une au moins des revendications précédentes, **caractérisé en ce que** sur la base des 8 premières équations (1) à (8), les valeurs différentielles sont calculées de la manière suivants :

$$\text{C1diff} = \text{(C1-C1')/2} \qquad (13)$$

$$= -\Delta\text{C1*cos}(\theta0+\omega3.5\text{Tcycle})\text{*sin}(3.5\omega\text{Tcycle}) \qquad (13b)$$

$$\text{C2diff} = \text{(C2-C2')/2} \qquad (14)$$

$$= \Delta\text{C2*sin}(\theta0+\omega3.5\text{Tcycle})\text{*sin}(2.5\omega\text{Tcycle}) \qquad (14b)$$

$$\text{C3diff(C3-C3')/2} \qquad (15)$$

$$= \Delta\text{C3*cos}(\theta0+\omega3.5\text{Tcycle})\text{*sin}(1.5\omega\text{Tcycle}) \qquad (15b)$$

$$\text{C4diff} = \text{(C4-C4')/2} \qquad (16)$$

$$= -\Delta\text{C4*sin}(\theta0+\omega3.5\text{Tcycle})\text{*sin}(0.5\omega\text{Tcycle}) \qquad (16b)$$

Fig. 2

Rotor as a plastic part w/ an active capacitive area.

Sine Cosine Sine Cosine

PCB as stator of two plate capacitive sensor

Fig. 1

**50**

**37**

**42**

**47**

**49**   **51**   **52**   **54**

Capacitive sensor

Stator
(PCB with conductive
electrical coating)

Rotor
(plastic part
with active
capacitance
area)

Capacitive measurement

SIN

-SIN

COSINE

-COSINE

Capacitance
measurement
circuitry

Encoding
circuitry

**48**

Fig. 3

Fig. 4

Case2/4q

Fig. 5

Case2/diff-4q

EP 2 330 388 B1

Fig. 6

Fig. 7

Fig. 8

Fig. 9

Fig. 10

Fig. 11

Fig. 13

Fig. 12

The basic measurement values
$C_1, C_2, C_3, C_4, C_4', C_3', C_2', C_1'$

⇩

Calculations of the appropriate mean values
$C_1^m, C_2^m, C_3^m, C_4^m$, Eq.(9)-(12)

⇩

Calculations of the appropriate differential values
$C_1^{diff}, C_2^{diff}, C_3^{diff}, C_4^{diff}$, Eq. (13)-(16)

⇩

Calculations of the ratio between the amplitude variations for each pair of signals:
$\Delta C_1/\Delta C_3$ and $\Delta C_2/C_4$, Eq. (21)-(24)

⇩

$\Delta C1/\Delta C3 = \Delta C2/C4$

**Y** → No wobble influence

Wobble influence **N**

Scaled some values of measurement so they have the same nominal and amplitude variations values like its pair, i.e.
$C_1^m$ and $C_3^m$ are one pair, Eq. (30)
$C_2^m$ and $C_4^m$ are the second pair, Eq. (31).

↓

Finding the common offset for each pair:
$C_{offset}^{13}$ and $C_{offet}^{24}$, Eq. (32)-(33)

↓

Finding the offset for each quadrant:
$C_{01}, C_{02}, C_{03}, C_{04}$, Eq. (34)-(37)

Calcuiation of the common offset for all 4 quadrants
$C_{01}=C_{02}=C_{03}=C_{04}=C_{offset}$
Eq. (38)-(40)

Initialization of the offset values

↓

Calculation of the measurements values without offset, i.e. without DC component:
$C_{10}^m, C_{20}^m, C_{30}^m, C_{40}^m$, Eq. (41)-(44)

○ ⇩
○

(Fig. 14b)

Fig. 14a

$$\Downarrow$$

Estimation of the position angles $\Phi$,
without calculation of x, Eq.(64a)-(64b)

$$\Downarrow$$

Finding the quadrant of the position, according to the
signs of calculated values $C_{10}{}^m$ and $C_{20}{}^m$, Eq.(65)-(68)

Fig. 14b

Encoder A, c1 capacitance curve, measured results

Fig. 15

Fig. 16

Spline interpolation. The red circles are measured points,
the blues circles are interpolated points.

## c1/c2 combination

Fig. 17

## c3/c4 combination

Fig. 18

Fig. 19

Fig. 20

**EP 2 330 388 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 60016395 C2

- EP 1173730 B1